# EUROPEAN PATENT APPLICATION

(11) **EP 0 990 389 A1**
(43) Date of publication of application: **05.04.2000**
(21) Application number: 99119560.3
(22) Date of filing: 01.10.1999
(51) Int. Cl.: A01M 23/38

(54) **Animal trap**

(30) Priority: 02.10.1998 GB 9821322
(71) Applicant: Carter, Michael Charles, Oswestry, Shropshire SY10 9JF (GB)
(72) Inventor: Carter, Michael Charles, Oswestry, Shropshire SY10 9JF (GB)
(74) Representative: Lally, William

(57) **Abstract**

An animal trap (10) comprising a bait holder (22) to receive bait (20) to attract an animal into the trap (10), non-electrically interconnected first and second electrical components (13, 16) disposed in the trap (10) between an entrance thereto and said bait holder (22) such that an animal desirous of taking said bait (20) will come into contact with both first and second components (13, 16), control means (18) operatively linked to a power supply (19) to cause a voltage to be applied across said first and second components (13, 16) when both components are in contact with said animal, with one of said first or second components (13, 16) being connected to earth so that the current flows through said animal, wherein one of said first or second components (13, 16) comprises a base (13) of the trap and wherein the other of said first or second components (16) is disposed at or approximately at the same level as the base (13).

## Description

### Description of Invention

This invention relates to an animal trap of the type which is capable of attracting and killing a variety of undesired animals, such as rats, mice, mink and other vermin.

A key requirement of such traps is that they be able to operate cleanly, efficiently, and repeatedly, without requiring frequent human intervention, so that they may be left unattended to operate at a desired site over a relatively long period of time.

A variety of animal traps are of course known, such as, for example, that which is shown in US 5406742A.

US '742 discloses a trap which uses an electric shock to kill the animal concerned, but is designed particularly for trapping and killing possums, with the result that it is bulky, cumbersome, and therefore unsuitable for general domestic use.

Moreover, it has been found that the trap shown in US '742 is in any event unsuitable for smaller animals such as rats and mice, owing to the standing position which an animal must adopt if the trap is to operate successfully.

It is therefore an object of the present invention to provide an animal trap which overcomes or at least reduces the problems associated with previous traps.

According to one aspect of the present invention, I provide an animal trap comprising a bait holder to receive bait to attract an animal into the trap, non-electrically interconnected first and second electrical components disposed in the trap between an entrance thereto and said bait holder such that an animal desirous of taking said bait will come into contact with both first and second components, control means operatively linked to a power supply to cause a voltage to be applied across said first and second components when both components are in contact with said animal, with one of said first or second components being connected to earth so that the current flows through said animal, wherein one of said first or second components comprises a base of the trap and wherein the other of said first or second components is disposed at or approximately at the same level as the base.

The other of said first or second components may comprise a raised member disposed slightly above the base.

Preferably, the raised member has an uppermost part positioned sufficiently low in relation to the base so that an animal entering the trap is able to see the bait means over the raised member.

Conveniently, the raised member comprises a platform, having an upper surface which desirably is generally parallel with the base, the raised member being connected to the base by an electrically non-conducting support. The raised member is preferably dimensioned such that an animal desirous of taking the bait need only rest its front legs on the raised member, with its rear legs remaining in contact with the base, thus ensuring that an electrical circuit is made between the first component, the animal, and the second component.

Preferably, the height of the raised member above the base is less than 5cm, and conveniently is approximately 1-2cm.

In this way, small animals such as mice are not impeded from resting their front legs on the raised member, thus enabling the trap to operate even with such small animals.

The trap is preferably provided with sensing means to sense when an animal engages the bait holder.

The sensing means preferably senses the presence of the animal by sensing an electric current which is caused to flow through the animal. There may therefore be provided a third electrical component associated with said bait holder to which current may be applied, such that an animal in contact with the bait holder completes a second electrical circuit between said third component and whichever of the first or second components is earthed.

Preferably, the third component is integral with the bait holder.

Alternatively, the bait holder itself may be electrically conductive, but electrically non-interconnected with the first and second components. It is also envisaged that electrically conductive (e.g. moist) bait could be used so that an animal in contact with the bait completes said second electrical circuit.

Desirably, the current which is caused to flow in said second electrical circuit is not of sufficient magnitude to harm the animal, and preferably, is sufficiently small so as to be undetectable by the animal.

The control means is preferably configured so that the fatal electric current is not passed between the first and second components until the second electrical circuit has been made, thus indicating the presence of an animal.

By requiring the completion of such a second electrical circuit, one component of which is disposed beyond the raised member, in the animal's direction of travel from the entrance, application of the higher current to the first electrical circuit is more likely to prove fatal to the animal, as in view of the animal's position, it is less able to break the first circuit through which the fatal current is passed.

Preferably, the control means is configured to first cause a relatively high voltage, and high current charge to pass through the animal, which, even if not immediately fatal to the animal, is sufficient to cause it to lose consciousness.

Conveniently, the control means is configured to cause subsequently a second charge to flow through the animal, of reduced voltage and of reduced current, of such a magnitude and at such a frequency as to ensure killing of the animal by inducing fibrillation of its heart.

One or each current may be caused to pulse, i.e. alternatively flow and cease to flow, for greater effect.

The higher current is preferably around 50 mA, at about 500 volts peak.

The lower current is preferably around 15-17 mA, at about 150-175 volts peak.

The base, which may be generally rectangular in plan view, is preferably pivoted at one end portion/region thereof, remote from the entrance to the trap.

It is envisaged, however, that the base could alternatively or in addition be pivoted at its other end, or at its sides.

The base is preferably resiliently biased towards a generally horizontal orientation, conveniently by a spring which may be connected to or associated with a shaft about which the base is pivoted.

The spring may comprise a coil spring disposed around the shaft, although it will be appreciated that other types of spring, or indeed other types of resilient biasing means, could conceivably be used.

The strength of the spring is preferably sufficient to maintain the base in a generally horizontal orientation in the absence of an animal resting on the base, but sufficiently weak to enable the base to pivot downwardly, under the weight of an animal, dropping the animal to a position below the base.

There is thus preferably provided a catch to maintain the base in a generally horizontal orientation, against the weight of an animal, with the catch being releasable when it is desired to cause the animal to drop to a position below the base.

Conveniently, the control means is operative to release the catch once the animal has been killed by the application of one or more electric shocks, so that the body of the animal is caused to fall into a storage means below the base of the trap, for subsequent collection.

The base may be provided with a transversely extending lug or pin, which is engaged in a recess of a pivotally mounted catch, with the catch being configured such that a latching operation is achieved on the return of the base from a released (i.e. downwardly extending) position to a generally horizontal orientation.

The catch preferably comprises a bearing surface against which an actuating member is caused to move by the control means, when release of the catch is desired. The bearing surface may comprise a strike plate against which a plunger of an electrically operated solenoid is caused to move, control of the solenoid being provided by the control means.

The trap is preferably provided with a cover, to shield the various components thereof from the elements and from unauthorised intrusion, and also to prevent injury to persons, especially children, who may otherwise become exposed to the electrical circuitry.

The trap may further comprise a light sensor and/or a timing device, operatively linked to the control means, so that the trap is only caused to operate at night, when animals are more likely to be present, but when children are less likely to be around, thus reducing the possibility of exposing them to accidental injury.

The trap may also comprise a so-called 'level' switch, which causes the trap to cease operation if it should be tipped over or moved substantially away from its usual operating orientation.

The invention will now be described by way of example only by reference to the accompanying drawings, in which
FIGURE 1 is a perspective and partly cut away illustration of a trap in accordance with the present invention,
FIGURE 2 is a side view of the trap, illustrating in addition how the trap may be used to store animal bodies for subsequent collection by an operator, and wherein
FIGURE 3 shows a modified construction of base.

Referring to the Figures, a trap 10 is shown comprising an open body 11, to which a cover 12 may be attached, conveniently by a hinge (not shown).

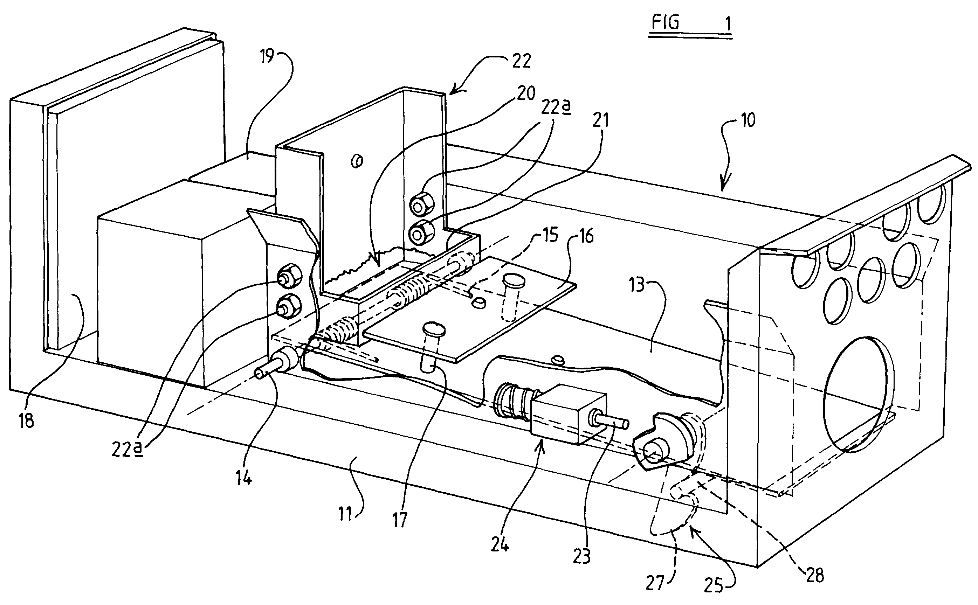

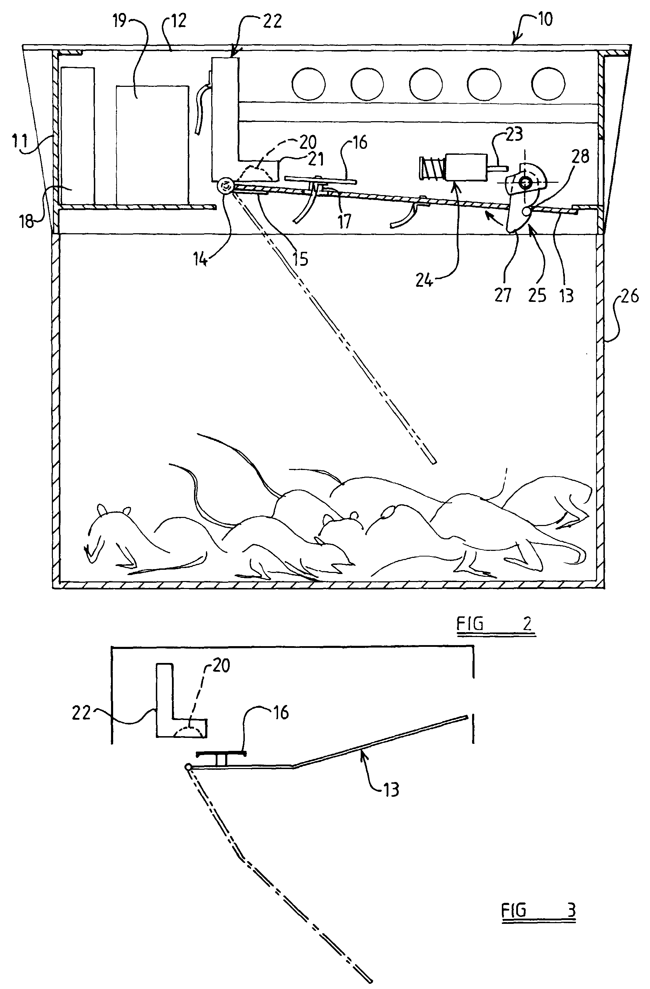

The trap comprises a generally rectangular base 13, which is pivotally mounted to the body 11 by a shaft 14 and which is connected to earth. The base 13 is resiliently biased towards the generally horizontal orientation shown in Figure 1, and in solid line in Figure 2, by two coil springs 15, located around the shaft 14. It will be appreciated that a precisely horizontal orientation is not required.

A metal plate 16, spaced from the base 13 by electrically insulating legs 17, is electrically connected to a control means 18 which in turn in connected to a power supply 19 in the form of a 12 volt DC battery.

The plate 16 is however not electrically connected in any way to the earthed base 13.

The plate 16 is dimensioned so that an animal entering the trap, and which is desirous of taking bait 20, is compelled to rest its front feet on the conducting plate 16, leaving its hind legs resting on the earthed base 13.

In this way, once an animal has entered the trap, and has started to take the bait 20 (which may be food or some other suitably attractive medium), a current passed from the control means 18 to the metal plate 16 is caused to flow though the animal and the base 13 to earth, thus providing the animal with a fatal electric shock.

The bait is preferably moist so that current may flow through the bait.

The trap is further provided with sensing means, provided by a third electrical component 21 which is electrically associated with a bait holder in the form of a container 22, which is secured to the body by electrically non-conductive bolts 22ª. Conveniently, the third component 21 may form part of the container 22.

Thus, as an animal approaches the bait 20, a part of the animal, usually its neck or upper torso, comes into contact with the component 21/container 22, which is insulated from the rest of the trap, with its hind legs resting on the earthed base 13. The control means is operative to cause a small, and desirably undetectable current to flow through the component 21, the animal and the base 13 to earth, thus enabling the control means 18 to detect that an animal is in a correct position, so that a fatal electric current may then be cause to flow through the metal plate 16, killing the animal.

The control means may also be operative to cause subsequently a second current to flow to the metal plate 16, of lesser voltage and lesser current, so as to fibrillate the heart of the animal, ensuring killing of the animal.

On completion of the shock applications, conveniently after a predetermined time period, the control means is operative to cause a plunger 23, actuated by a solenoid 24, to displace a catch 25, which allows the base to pivot downwardly, under the weight of the animal, releasing the body of the animal into a receptacle 26 below.

The receptacle may be contained within a pit in the ground, or, if the trap is mounted above ground level, the receptacle may be generally free standing, albeit sealed to prevent unauthorised intrusion.

The coil springs 15 are not sufficiently strong to maintain the base in a generally horizontal orientation in the presence of an animal, but are sufficiently strong to bring the base back to a generally horizontal orientation once the weight of the animal has been removed.

The catch 25 comprises a cam surface 27, borne upon by a lug 28 on the base 13, thus providing a latching operation on return of the base to a generally horizontal orientation.

In this way, the trap may be re-set for subsequent use.

The trap provides advantages over those previously known in that the arrangement and configuration of the electrically conducting parts enables a relatively compact structure to be produced. Additionally, by the use of a relatively low conductor plate 16, which is easily mounted by most small animals, a more versatile trap is provided. Furthermore, the design of the catch enables it to be released relatively easily, which reduces the power required by the solenoid. Thus, a prolonged battery life is achieved.

Whilst the base has been described as being generally horizontally orientated, it is envisaged that the base may in fact be caused to lie at an angle, so that it slopes downwardly, away from the entrance. In this way, should an animal jump from the plate 16 at any point, it will slide along the base back towards the plate. This is shown schematically in Figure 3.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An animal trap (10) comprising a bait holder (22) to receive bait (20) to attract an animal into the trap (10), non-electrically interconnected first and second electrical components (13, 16) disposed in the trap (10) between an entrance thereto and said bait holder (22) such that an animal desirous of taking said bait (20) will come into contact with both first and second components (13, 16), control means (18) operatively linked to a power supply (19) to cause a voltage to be applied across said first and second components (13, 16) when both components are in contact with said animal, with one of said first or second components (13, 16) being connected to earth so that the current flows through said animal, wherein one of said first or second components (13, 16) comprises a base (13) of the trap and wherein the other of said first or second components (16) is disposed at or approximately at the same level as the base (13).

2. An animal trap (10) according to claim 1 wherein the other of said first or second components comprises a raised member (16) disposed slightly above the base (13), having an uppermost part positioned sufficiently low in relation to the base (13) so that an animal entering the trap is able to see the bait over the raised member (16).

3. An animal trap (10) according to claim 2 in which the raised member (16) comprises a platform having an upper surface which is disposed generally parallel to the base (13).

4. An animal trap (10) according to claim 2 or claim 3 wherein the height of the raised member (16) above the base (13) is less than about 5cm, conveniently 1 to 2cm.

5. An animal trap (10) according to any one of the preceding claims comprising sensing means (21) operative to sense when an animal engages the bait holder (22).

6. An animal trap (10) according to claim 5 wherein the sensing means (21) senses the presence of the animal by sensing an electric current which is caused to flow through the animal.

7. An animal trap (10) according to claim 5 or claim 6 comprising a third electrical component (21) associated with said bait holder (22) to which an electric current may be applied, such that an animal in contact with the bait holder (22) completes a second electrical circuit between said third component (21) and whichever of the first or second components is earthed (13, 16).

8. An animal trap (10) according to claim 7 wherein the control means (21) is configured in such a manner that the electric current between the first and second components (13, 16) is only passed once the second electrical circuit has been made.

9. An animal trap (10) according to any one of the preceding claims wherein the control means (21) is operative to deliver or cause delivery of a second charge to the animal, of lesser voltage and having a smaller current than the first charge.

10. An animal trap (10) according to any one of the preceding claims wherein at least part of the base (13) slopes downwardly in a direction away from the entrance to the trap.
